# EUROPEAN PATENT APPLICATION

(11) **EP 1 901 374 A1**
(43) Date of publication of application: **19.03.2008**
(21) Application number: 07017507.0
(22) Date of filing: 06.09.2007
(51) Int. Cl.: H01M 4/48, H01M 4/50, H01M 4/52, H01M 10/40

(54) **Positive electrode for non-aqueous electrolyte secondary battery and non-aqueous electrolyte secondary battery using the same**

(30) Priority: 14.09.2006 JP 2006249611; 27.04.2007 JP 2007119993
(71) Applicant: Nissan Motor Co., Ltd., Kanagawa 221-0023 (JP)
(72) Inventor: Miura, Tamaki, Atsugi-shi Kanagawa 243-0192 (DE); Ohsawa, Yasuhiko, Atsugi-shi Kanagawa 243-0192 (DE)
(74) Representative: Schmitz, Hans-Werner

(57) **Abstract**

A positive electrode for a non-aqueous electrolyte secondary battery of the present invention has: a current collector; and a positive electrode active material layer formed on the current collector. The positive electrode active material layer contains, as positive electrode active materials, spinel lithium manganate, and a composite oxide represented by the following formula (1):

LiCoᵥNiₓMnyM_{z}O₂ (1)

where v+x+y+z=1, M is any one selected from the group consisting of aluminum, gallium and indium, 0≤v≤0.5, 0.3≤x<1, 0≤y≤0.5 and 0≤z≤0.1. Further, an average particle diameter of the composite oxide is larger than an average particle diameter of the spinel lithium manganate.

## Description

### BACKGROUND OF THE INVENTION

### 1. Field of the Invention

The present invention relates to a non-aqueous electrolyte secondary battery. More specifically, the present invention relates to a non-aqueous electrolyte secondary battery excellent in capacity characteristics and output characteristics.

### 2. Description of the Related Art

In recent years, reduction of the amount of carbon dioxide has been eagerly desired in order to deal with the air pollution and the global warming. In the automotive industry, expectations have been focused on the reduction of the amount of carbon dioxide, which is brought by introducing an electric vehicle (EV) and a hybrid electric vehicle (HEV). Therefore, a secondary battery to drive a motor (motor-driving secondary battery), which has the key to put the EV and the HEV into practical use, has been actively developed.

As the motor-driving secondary battery, a non-aqueous electrolyte secondary battery having the highest theoretical energy among all batteries attracts attention, and is now being developed rapidly. In general, the non-aqueous electrolyte secondary battery includes a positive electrode, a negative electrode, and an electrolyte layer. In this case, the positive electrode is formed by coating a positive electrode active material and the like on both surfaces of a positive current collector by using a binder, and the negative electrode is formed by coating a negative electrode active material and the like on both surfaces of a negative current collector by using the binder. Then, the positive electrode and the negative electrode are connected to each other while interposing the electrolyte layer therebetween, and are housed in a battery case.

The non-aqueous electrolyte secondary battery as described above, which is for use as the motor-driving secondary battery of the automobile and the like, is required to have extremely high output characteristics in comparison with a consumer-oriented non-aqueous electrolyte secondary battery for use in a cellular phone, a notebook personal computer, or the like. It is a current situation that research and development for such a non-aqueous electrolyte secondary battery are diligently progressed so that such a requirement can be satisfied.

In order to enhance the output characteristics of the non-aqueous electrolyte secondary battery while bearing in mind that the non-aqueous electrolyte secondary battery is to be mounted on the automobile, technologies as will be described below have been heretofore proposed. For example, for the purpose of further enhancing the output characteristics so that the non-aqueous electrolyte secondary battery can be used as a secondary battery for the automobile, there has been proposed a technology using, as the positive electrode, a spinel-structured manganese composite oxide with a BET specific surface area of 3 m²/g or more (refer to Japanese Patent Unexamined Publication No. H7-97216 (published in 1995)). Moreover, an electrode with a specific surface area of 4 m²/g has also been proposed (refer to Japanese Patent Unexamined Publication No. H7-122262 (published in 1995)).

Meanwhile, in order to obtain an effect to enhance an output of the secondary battery, not only the specific surface areas are increased as described above, but also an electrode in which a particle size of a constituent material is extremely small is used, whereby it is expected that a high-output battery is realized. Heretofore, many opinions have been viewed, that such an effect to enhance cycle characteristics and output characteristics of the secondary battery by reducing the particle size should be examined under a condition where the particle size is 5 µm or more (refer to Japanese Patent Unexamined Publication No. 2003-151547). As the reason why such a lower limit is set for the particle size, it is mentioned that, as a diameter of the particles is being reduced, a ratio of other solid contents such as the binder necessary to form each electrode is increased, and an amount of the active material per unit weight is reduced.

### BRIEF SUMMARY OF THE INVENTION

However, it is verified that the reduction of such a particle diameter of the active material brings the effect to increase the output rather than an influence that a designed capacity is decreased.

It is an object of the present invention to provide means capable of further enhancing both of the capacity characteristics and the output characteristics in the non-aqueous electrolyte secondary battery intended to be mounted on the automobile.

According to one aspect of the present invention, there is provided a positive electrode for a non-aqueous electrolyte secondary battery, comprising: a current collector; and a positive electrode active material layer formed on the current collector, wherein the positive electrode active material layer comprises, as positive electrode active materials, spinel lithium manganate, and a composite oxide represented by the following formula (1):

LiCoᵥNiₓMn_{y}M_{z}O₂ (1)

where v+x+y+z=1, M is any one selected from the group consisting of aluminum, gallium and indium, 0≤v≤0.5, 0.3≤x≤1, 0≤y≤0.5 and 0≤z≤0.1, and an average particle diameter of the composite oxide is larger than an average particle diameter of the spinel lithium manganate.

### BRIEF DESCRIPTION OF THE SEVERAL VIEWS OF THE DRAWING

FIG. 1 is a cross-sectional view showing a positive electrode for a non-aqueous electrolyte secondary battery of a first embodiment.
FIG. 2 is a cross-sectional view showing a non-aqueous electrolyte secondary battery as a bipolar battery of a second embodiment.
FIG. 3 is a perspective view of an assembled battery of a third embodiment.
FIG. 4 is a schematic view of an automobile of a fourth embodiment, which mounts the assembled battery of the third embodiment thereon.
FIG. 5 is a cross-sectional view showing an outline of a non-aqueous electrolyte secondary battery that is not bipolar.
FIG. 6 is a table showing configurations and evaluation results of Examples and Comparative examples.

### DETAILED DESCRIPTION OF THE INVENTION

Hereinafter, description will be made of embodiments of the present invention with reference to the drawings.

### (First Embodiment)

A first embodiment of the present invention is a positive electrode for a non-aqueous electrolyte secondary battery, which is composed by forming a positive electrode active material layer on a current collector. Moreover, the positive electrode active material layer contains, as positive electrode active materials, spinel lithium manganate, and a composite oxide represented by the following formula (1):

LiCoᵥNiₓMn_{y}M_{z}O₂ (1)

(where v+x+y+z=1, M is any one selected from the group consisting of aluminum (Al), gallium (Ga) and indium (In), 0≤v≤0.5, 0.3≤x<1, 0≤y≤0.5, and 0≤z≤0.1). Moreover, the positive electrode active material layer is characterized in that an average particle diameter of the composite oxide is larger than an average particle diameter of the spinel lithium manganate.

Although having excellent capacity characteristics, the composite oxide has a problem intrinsic thereto, that thermal stability is inferior. However, the average particle diameter of the composite oxide is adjusted so as to be larger than the average particle diameter of the spinel lithium manganate excellent in output characteristics, thus making it possible to provide a positive electrode in which the output characteristics and the capacity characteristics are enhanced.

A description will be specifically made of the positive electrode of the present invention with reference to the drawings. Note that the drawings are exaggerated for convenience of the explanation; however, the technical scope of the present invention is not limited to embodiments shown in the drawings. Hence, it is possible to also adopt embodiments other than shown in the drawings.

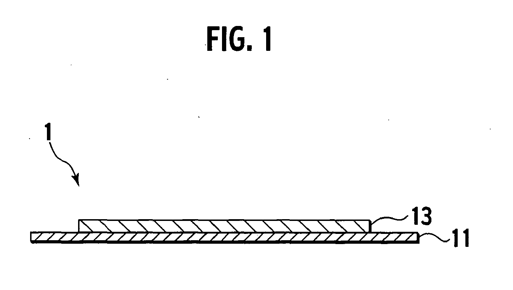

FIG. 1 is a cross-sectional view showing an embodiment of the positive electrode for the non-aqueous electrolyte secondary battery of the present invention. As shown in FIG. 1, the positive electrode for the non-aqueous electrolyte secondary battery has a configuration in which a positive electrode active material layer 13 is formed on one surface of a current collector 11.

A description will be made in detail of such members composing the positive electrode of this embodiment.

### [Positive electrode active material layer]

### (Positive electrode active material)

In the present invention, the positive electrode active material contained in the positive electrode active material layer 13 has the spinel lithium manganate, and the composite oxide represented by the following formula (1):

LiCoᵥNiₓMn_{y}M_{z}O₂ (1)

(where v+x+y+z=1, M is any one selected from the group consisting of Al, Ga and In, 0≤v≤0.5, 0.3≤x<1, 0≤y≤0.5, and 0≤z≤0.1). Moreover, the positive electrode active material layer is characterized in that the average particle diameter of such a Ni composite oxide for use in the present invention is larger than the average particle diameter of the spinel lithium manganate. Note that, in this specification, the above-described composite compound is also simply referred to as the "Ni composite oxide".

The spinel lithium manganate stands for a compound having a spinel structure and containing lithium (Li), manganese (Mn), and oxygen (O) as main components. Besides these atoms, small amounts of other metal atoms, for example, nickel (Ni), cobalt (Co), iron (Fe), aluminum (Al), chromium (Cr), magnesium (Mg), silver (Ag), titanium (Ti), indium (In), and the like may be contained within a range not to inhibit activity of the spinel lithium manganate as the positive electrode active material. Specifically, as the spinel lithium manganate, LiMn₂O₄, Li₂MnO₄, and Li₂MnO₃, and the like are mentioned; however, the spinel lithium magnate is not limited to these compositions. Note that, in this specification, the spinel lithium manganate is also simply referred to as a "Mn composite oxide".

The first embodiment of the present invention is characterized in that the Mn positive electrode active material (Mn composite oxide) and the Ni positive electrode active material (Ni composite oxide) are used in combination. As described above, since the Ni positive electrode active material is inferior in thermal stability, there has heretofore been a possibility that, when a particle diameter thereof is reduced, a specific surface area thereof is increased, and safety of the battery is decreased. Such a decrease of the safety is considered to result from that a crystalline structure of the Ni positive electrode active material becomes unstable, leading to thermal runaway.

However, according to the present invention, the particles composing the Ni positive electrode active material are controlled to be larger in diameter than particles composing the Mn positive electrode active material, and are then used. Specifically, without being subjected to pulverizing, the Ni positive electrode active material is made to exist like a pillar in an electrode while being made larger than the Mn positive electrode active material. In such a way, a capacity decrease and safety decrease of the Ni positive electrode active material can be suppressed. Note that the above-described reason for the decrease of the safety is only a surmise by the inventors of the present invention, and does not affect the technical scope of the present invention.

As described above, if only the average particle diameter of the Ni composite oxide is made larger than the average particle diameter of the spinel lithium manganate, the above-described effect can be obtained. However, in the case of considering to provide a positive electrode in which the capacity characteristics and the output characteristics are enhanced, a ratio of the average particle diameter of the composite oxide with respect to the average particle diameter of the spinel lithium manganate is preferably within a range from more than 1 to 100 or less, more preferably, more than 1 to 35 or less, and still more preferably, more than 1 to 10 or less.

Moreover, in the case of considering to suppress excessive activity of the thermally unstable Ni composite oxide by decreasing the specific surface area thereof, and to thereby prevent the decrease of the thermal stability, the average particle diameter of the Ni composite oxide is preferably within a range from 1 to 15 µm, more preferably, 3 to 12 µm, and still more preferably, 4 to 10 µm. Furthermore, with regard to the Mn composite oxide, in the case of considering to increase the specific surface area by reducing the particle diameter, and to thereby significantly enhance the output by enhancing the activity, the average particle diameter of the Mn composite oxide is preferably within a range from 0.3 to 6 µm, more preferably, 0.5 to 5 µm, and still more preferably, 1 to 3 µm.

There are no limitations on a specific value of the average particle diameter of the positive electrode active material as a whole; however, the value of the average particle diameter is preferably within a range from 0.1 to 20 µm, more preferably, 0.5 to 10 µm, and still more preferably, 1 to 5 µm. The reason why these ranges are preferable is that it is easy to confirm a particle size distribution in an image analysis, and that the output characteristics are also ensured.

As described above, the spinel lithium manganate that is small in particle diameter and has the high output characteristics and the Ni composite oxide that has the excellent capacity characteristics are mixed together within particle diameter ranges appropriate thereto. In such a way, a battery that has high output characteristics and high capacity characteristics can be designed.

Note that, in this specification, the average particle diameter of the active material stands for D50 (50% cumulative particle diameter), and is defined to be measured by a method described in an embodiment to be described later.

As described above, if only the average particle diameter of the Ni composite oxide is made larger than the average particle diameter of the spinel lithium manganate, then the above-described effect can be obtained. However, a mass ratio of the Ni composite oxide with respect to the spinel lithium manganate in the positive electrode active material layer is controlled to be within a range of preferably 5 to 50%, more preferably, 10 to 40%, and still more preferably, 15 to 30%. When the mass ratio is set within these ranges, the safety of the battery can be ensured since a ratio of the material high in thermal stability is comparatively increased.

Moreover, a BET specific surface area of the positive electrode active material is preferably within a range from 1 to 60 cm²/g, and more preferably, 1 to 40 cm²/g. The BET specific surface area according to the present invention is calculated by a weighted average of two types of the components (Ni and Mn composite oxides). The BET specific surface area is set within the above-described ranges, whereby the stability can be ensured more. Note that the BET specific surface area is measured by the nitrogen adsorption method.

A thickness of the positive electrode active material layer 13 is not particularly limited, and for the thickness, it is possible to appropriately refer to the conventionally known knowledge in public about the non-aqueous electrolyte secondary battery. Mentioning an example, the thickness of the positive electrode active material layer 13 is preferably within a range from about 3 to 100 µm, and more preferably, about 10 to 80 µm. When the thickness of the positive electrode active material layer 13 is about 10 µm or more, it is possible to ensure the battery capacity sufficiently. Meanwhile, when the thickness of the positive electrode active material layer 13 is about 80 µm or less, it is possible to suppress an occurrence of a problem that internal resistance thereof is increased following that lithium ions are less likely to be diffused into a deep portion (current collector side) of the electrode.

The positive electrode active material layer 13 of the secondary battery-use positive electrode of the present invention essentially contains the positive electrode active material. In addition, the positive electrode active material layer 13 may contain a binder, a conductive material, an electrolyte, and other compounds added according to needs, and a blend ratio of these components is not particularly limited. Hence, the blend ratio just needs to be selected by appropriately referring to the conventionally known knowledge in public in response to the usage purpose of the secondary battery-use electrode.

### (Binder)

The binder refers to an additive blended in order to bind the plurality of components contained in the active material layer to one another. As specific examples of the binder, there are preferably mentioned: thermoplastic resin such as polyvinylidene fluoride (PVDF), polyvinyl acetate, polyimide, and a urea resin; thermosetting resin such as an epoxy resin and a polyurethane resin; and rubber material such as a butyl rubber and a styrene rubber (styrene-butadiene rubber: SBR), and the like.

### (Conductive material)

The conductive material refers to an additive blended in order to enhance electrical conductivity of the active material layer. As examples of the conductive material, there are mentioned graphite, carbon black, carbon fiber, acetylene black, potassium titanate, titanium carbide, titanium dioxide, silicon carbide, zinc oxide, magnesium oxide, tin dioxide, indium oxide, and the like.

### (Electrolyte)

As the electrolyte, liquid electrolyte and polymer electrolyte are usable.

The liquid electrolyte has a form in which a lithium salt as supporting salt is dissolved into an organic solvent as a plasticizer. As the organic solvent usable as the plasticizer, for example, there are mentioned carbonates such as ethylene carbonate (EC) and propylene carbonates (PC) are illustrated. Moreover, as the supporting salt (lithium salt), there are mentioned Li(C₂F₅SO₂)₂N, LiPF₆, LiBF₄, LiClO₄, LiAsF₆, LiCF₃SO₃, and the like.

Meanwhile, the polymer electrolyte is classified into gel electrolyte that contains an electrolysis solution and intrinsic polymer electrolyte that does not contain the electrolysis solution.

The gel electrolyte has a configuration formed by injecting the above-described liquid electrolyte into matrix polymer made of ion-conductive polymer. As the ion-conductive polymer for use as the matrix polymer, for example, polyethylene oxide (PEO), polypropylene oxide (PPO), copolymer of these, and the like are mentioned. Electrolyte salt such as the lithium salt can be dissolved well into such polyalkylene oxide polymer.

Here, the above-described polymer may be the same as or different from ion-conductive polymer for use in an electrolyte layer of the battery for which the positive electrode for the non-aqueous electrolyte secondary battery of the present invention is employed; however, preferably, the polymer may be the same.

### (Polymerization initiator)

A polymerization initiator is blended in order to act on cross-link groups of the ion-conductive polymer and to progress a cross-link reaction thereof. The polymerization initiator is classified into a photopolymerization initiator, a thermal polymerization initiator, and the like in response to external factors which allow the starting agent to exert a function thereof. As the polymerization initiator, for example, there are mentioned azobisisobutyronitrile (AIBN) as the thermal polymerization initiator, benzyl dimethyl ketal (BDK) as the photopolymerization initiator, and the like.

### [Current Collector]

The current collector 11 is composed of a conductive material such as aluminum foil, nickel foil, stainless steel (SUS) foil, and alloys of these. A general thickness of the current collector is 10 to 20 µm. However, a collector with a thickness out of this range may be used.

A size of the collector is decided in response to the usage purpose of the battery. If a large electrode for use in a large battery is fabricated, then a current collector with a large area is used. If a small electrode is fabricated, then a current collector with a small area is used.

### [Manufacturing Method of Positive electrode of This Embodiment]

Subsequently, a description will be made of a manufacturing method of the positive electrode of this embodiment.

First, the positive electrode active material is added to the solvent, whereby slurry of the active material is prepared (preparation step of positive electrode active material slurry). Next, the positive electrode active material slurry is coated on a surface of the current collector, followed by drying, whereby a film is formed (film formation step). Thereafter, a stacked body fabricated through the film formation step is pressed in a stack direction (pressing step). When the ion-conductive polymer is added to the active material slurry, and the polymerization initiator is further added for the purpose of causing the cross-link reaction for the ion-conductive polymer, polymerization treatment may be implemented at the same time when the drying in the film formation step is performed, or before or after the drying.

A description will be made in detail of such a manufacturing method in order of steps; however, the present invention is not limited only to an embodiment to be described below.

### (Preparation step of positive electrode active material slurry)

In this step, a desired positive electrode active material and other components according to needs (for example, binder, conductive material, electrolyte, polymerization initiator, and the like) are mixed together in the solvent, and the positive electrode active material slurry is prepared. Specific types of the respective components blended into this positive electrode active material slurry are as described in the column about the configuration of the electrode of the present invention, and accordingly, a detailed description thereof will be omitted here.

A type of the solvent and mixing means are not particularly limited, and it is possible to appropriately refer to the conventionally known knowledge in public about the manufacture of the electrode. As examples of the solvent, there are mentioned N-methyl-2-pyrrolidone (NMP), dimethylformamide, dimethylacetoamide, methylformamide, and the like. When the polyvinylidene fluoride (PVDF) is employed as the binder, it is recommended to use NMP as the solvent.

### (Film formation step)

Subsequently, the current collector is prepared, and the positive electrode active material slurry prepared in the above-described step is coated on the surface of the current collector, and is then dried. In such a way, the film made of the positive electrode active material slurry is formed on the surface of the current collector. This film becomes the positive electrode active material layer through the pressing step to be described later.

A specific type of the prepared current collector is as described in the column about the configuration of the electrode of the present invention, and accordingly, a detailed description thereof will be omitted here.

Coating means for coating the positive electrode active material slurry is not particularly limited, either; however, for example, it is possible to employ a generally used coating means such as an autonomic coater.

The film is formed in response to a desired arrangement form of the current collector and the positive electrode active material layer in the manufactured electrode. For example, when the manufactured electrode is a bipolar electrode, a film containing the positive electrode active material is formed on one surface of the current collector. Note that a film containing a negative electrode active material is formed on the other surface. As opposed to this, when an electrode that is not bipolar is manufactured, a film containing any one of the positive electrode active material and the negative electrode active material is formed on both surfaces of one current collector.

Thereafter, the film formed on the surface of the current collector is dried. In such a way, the solvent in the film is removed. A drying method for drying the film is not particularly limited, either, and it is possible to appropriately refer to the conventionally known knowledge in public about the manufacture of the electrode. For example, heating treatment is illustrated. It is possible to appropriately set drying conditions (drying time, drying temperature, and the like) in response to a coating amount of the active material slurry and a volatilization rate of the solvent in the slurry.

When the film contains the polymerization initiator, a polymerization step is further performed, whereby the ion-conductive polymer in the film is cross-linked by the cross-link groups.

Such polymerization treatment in the polymerization step is not particularly limited, either, and the conventionally known knowledge in public just needs to be appropriately referred to. For example, when the film contains the thermal polymerization initiator (AIBN or the like), heat treatment is implemented for the film. Moreover, when the film contains the photopolymerization initiator (BDK or the like), light such as an ultraviolet ray is irradiated onto the film. Note that the heat treatment for the thermal polymerization may be performed simultaneously with the above-described drying step, or may be performed before or after the drying step.

### (Pressing step)

Subsequently, the stacked body fabricated through the film formation step is pressed in the stack direction. In such a way, the battery-use electrode of the present invention is completed. In this case, it is possible to control a porosity of the active material layer by adjusting pressing conditions.

Specific unit and pressing conditions for such pressing treatment are not particularly limited, and are appropriately adjustable so that the porosity of the active material layer after the pressing treatment can have a desired value. As specific units for the pressing treatment, for example, there are mentioned a hot press machine, a calendar roll press machine, and the like. Moreover, the pressing conditions (temperature, pressure, and the like) are not particularly limited, either, and it is possible to appropriately refer to the conventionally known knowledge in public.

### (Second Embodiment)

In a second embodiment, the non-aqueous electrolyte secondary battery is composed by using the positive electrode for the non-aqueous electrolyte secondary battery of the above-described first embodiment. Specifically, the second embodiment of the present invention is a non-aqueous electrolyte secondary battery including at least one single cell layer formed by stacking the positive electrode, the electrolyte layer, and the negative electrode in this order, characterized in that the positive electrode for the non-aqueous electrolyte secondary battery according to the present invention is used as the above-described positive electrode.

The non-aqueous electrolyte secondary battery including, as at least one electrode, the positive electrode for the non-aqueous electrolyte secondary battery of the present invention belongs to the technical scope of the present invention. However, preferably, all the electrodes composing the non-aqueous electrolyte secondary battery are the electrodes of the present invention. By adopting such a configuration, it is possible to effectively enhance the capacity characteristics and output characteristics of the non-aqueous electrolyte secondary battery.

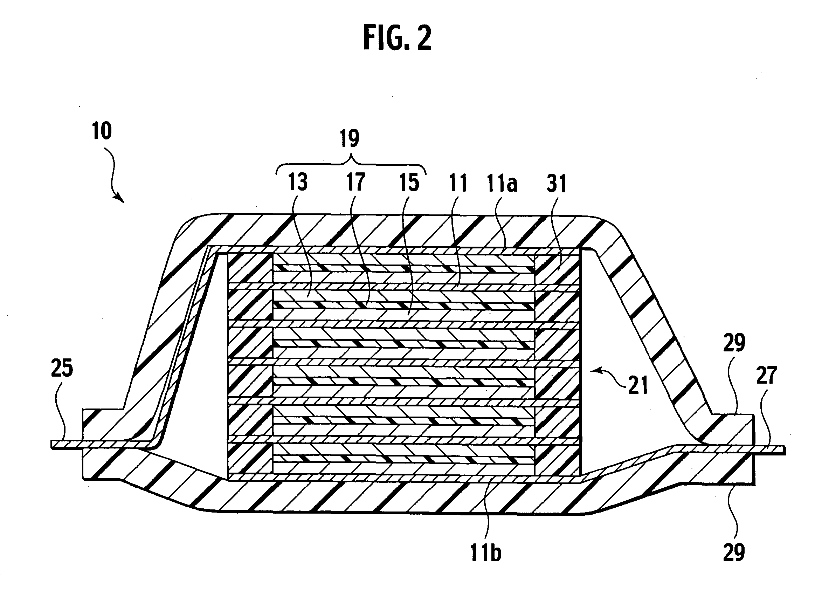

The battery of the present invention can be a bipolar non-aqueous electrolyte secondary battery (hereinafter, also referred to as a "bipolar battery"). FIG. 2 is a cross-sectional view showing the non-aqueous electrolyte secondary battery of the second embodiment of the present invention, which is the bipolar battery. A description will be made below in detail of the second embodiment by taking as an example the bipolar battery shown in FIG. 2; however, the technical scope of the present invention is not limited to such an embodiment.

A bipolar battery 10 of this embodiment, which is shown in FIG. 2, has a configuration in which a substantially rectangular battery element 21 where charge/discharge reactions actually proceed is sealed in an inside of a laminate sheet 29 as a package.

As shown in FIG. 2, the battery element 21 of the bipolar battery 10 of this embodiment includes a plurality of the bipolar electrodes, in each of which the positive electrode active material layer 13 and a negative electrode active material layer 15 are formed on the respective surfaces of the current collector 11. The respective bipolar electrodes are stacked on one another while interposing electrolyte layers 17 thereamong, and thereby form the battery element 21. In this case, the respective bipolar electrodes and the electrolyte layers 17 are stacked so that the positive electrode active material layer 13 of one bipolar electrode can be opposed to the negative electrode active material layer 15 of the other bipolar electrode adjacent to the one bipolar electrode while interposing the electrolyte layer 17 therebetween.

Then, the positive electrode active material layer 13, the electrolyte layer 17, and the negative electrode active material layer 15, which are adjacent to one another, compose one single cell layer 19. Hence, it can also be said that the bipolar battery 10 has a configuration formed by stacking the single cell layers 19 on one another. Moreover, on outer circumferences of the single cell layers 19, insulating layers 31 for insulating the adjacent current collectors 11 from one another are provided. Note that, in each of the current collectors 11a, 11b (outermost current collectors) located on the outermost layers of the battery element 21, only on one surface thereof, any one of the positive electrode active material layer 13 and the negative electrode active material layer 15 is formed.

Moreover, in the bipolar battery 10 shown in FIG. 2, the positive-side outermost current collector 11a is extended to be formed into a positive tab 25, and is drawn out from the laminate sheet 29 as the package. Meanwhile, the negative-side outermost current collector 11b is extended to be formed into a negative tab 27, and is drawn out from the laminate sheet 29 in a similar way.

A description will be briefly made of members composing the bipolar battery 10 of this embodiment. However, since the components composing the positive electrode are as described above, a description thereof will be omitted here. Moreover, the technical scope of the present invention is not limited only to the embodiment to be described below, and it is possible to adopt the conventionally known embodiment in public in a similar way.

### [Negative Electrode]

### (Current collector)

A current collector of the negative electrode is similar to that of the positive electrode of the first embodiment, and accordingly, a detailed description thereof will be omitted here.

### (Negative electrode active material layer)

As the negative electrode active material contained in the negative electrode active material layer, for example, there are illustrated: a carbon material such as graphite and amorphous carbon; a lithium-transition metal compound; a metal material (metal lithium); and a lithium alloy such as a lithium-aluminum alloy, a lithium-tin alloy, and a lithium-silicon alloy; and the like. Depending on the case, two or more types of the negative electrode active materials may be used in combination.

Note that the negative electrode active material layer 15 of the present invention essentially contains the negative electrode active material. In addition, the negative electrode active material layer 15 may contain the binder, the conductive material, the electrolyte, and other compounds added according to needs, and there are no particular limitations on selection of these. Such optional additives just need to be selected by appropriately referring to the conventionally known knowledge in public. Details of the above have already been described, and accordingly, will be omitted here.

### (Electrolyte layer)

An electrolyte composing the electrolyte layer 17 is as described above, and accordingly, a detailed description thereof will be omitted here.

### (Insulating layer)

In the bipolar battery 10, in usual, the insulating layer 31 is provided on the circumference of each single cell layer 19. This insulating layer 31 is provided for the purpose of preventing mutual contact between the adjacent current collectors 11 in the battery and an occurrence of short circuit owing to slight irregularities of ends of the single cell layers 19 in the battery element 21. By placing such insulating layers 31, long-term reliability and safety are ensured, whereby it is possible to provide the bipolar battery 10 that is high quality.

Each insulating layer 31 just needs to be the one having insulating property, sealing property against detachment of the solid electrolyte, sealing property (hermetic sealing property) against permeation of moisture from the outside, heat resistance under a battery operation temperature, and the like. For example, a urethane resin, an epoxy resin, a polyethylene resin, a polypropylene resin, a polyimide resin, rubber, and the like are used. Among them, the urethane resin and the epoxy resin are preferable from viewpoints of corrosion resistance, chemical resistance, forming easiness (film forming property), cost efficiency, and the like.

### (Tab)

In the bipolar battery 10, the tabs (positive tab 25 and negative tab 27) electrically connected to the outermost current collectors (11a, 11b) are drawn outside of the package for the purpose of extracting a current to the outside of the battery. Specifically, the positive tab 25 electrically connected to the positive-side outermost current collector 11 a and the negative tab 27 electrically connected to the negative-side outermost current collector 11b are drawn outside of the package.

A material of the tabs (positive tab 25 and negative tab 27) is not particularly limited, and the publicly known material heretofore used as tabs for the bipolar battery is usable. For example, aluminum, copper, titanium, nickel, stainless steel (SUS), alloys of these, and the like are illustrated. Note that, for the positive tab 25 and the negative tab 27, the same material may be used, or different materials may be used. Note that the tabs (25, 27) may be formed by extending the outermost current collectors (11a, 11b) as in this embodiment, or tabs prepared separately may be connected to the outermost current collectors.

### (Package)

In the bipolar battery 10, preferably, the battery element 21 is housed in the package such as the laminate sheet 29 in order to prevent an external impact while the battery is being used and a deterioration resulting from environmental factors. The package is not particularly limited, and the conventionally known package in public is usable. Preferably, a polymer-metal composite laminate sheet and the like are usable from a viewpoint that heat is efficiently transmitted from a heat source of the automobile to make it possible to rapidly heat up the inside of the battery to a battery operation temperature.

### (Third Embodiment)

In a third embodiment, an assembled battery is composed by parallelly and/or serially connecting a plurality of the bipolar batteries of the above-described second embodiment.

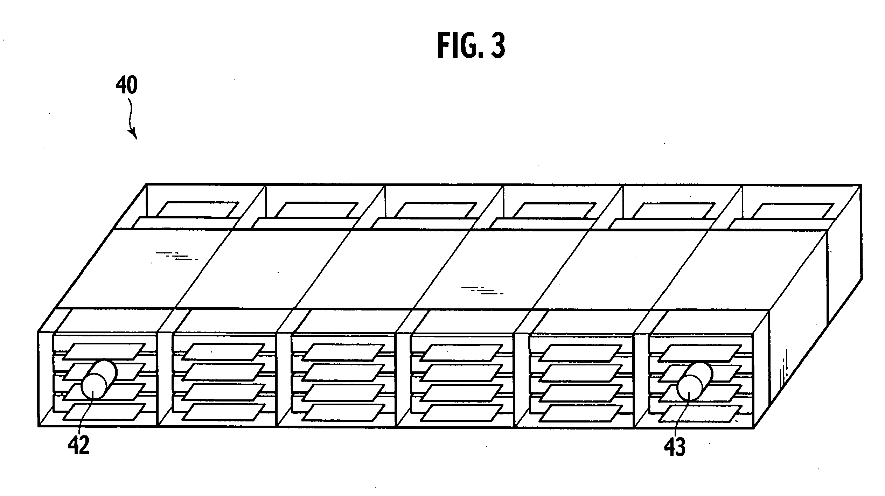

FIG. 3 is a perspective view showing the assembled battery of this embodiment.

As shown in FIG. 3, an assembled battery 40 is composed by connecting the plurality of bipolar batteries described in the above-described second embodiment to one another. The respective bipolar batteries 10 are connected to one another by connecting the positive tabs 25 and negative tabs 27 thereof to one another by using bus bars. On one side surface of the assembled battery 40, electrode terminals 42 and 43 are provided as electrodes of the entirety of the assembled battery 40.

A connection method when the plurality of bipolar batteries 10 composing the assembled battery 40 are connected to one another is not particularly limited, and it is possible to appropriately employ the conventionally known method in public. For example, it is possible to employ a method using welding such as ultrasonic welding and spot welding and a fixing method using rivets, caulkings, and the like. In accordance with such a connection method, it is possible to enhance long-term reliability of the assembled battery 40.

In accordance with the assembled battery 40 of this embodiment, since the individual bipolar batteries 10 composing the assembled battery 40 have the excellent capacity characteristics and output characteristics, it is possible to provide an assembled battery excellent in capacity characteristics and output characteristics.

Note that, with regard to the connection among the bipolar batteries 10 composing the assembled battery 40, all the plural bipolar batteries 10 may be parallelly connected or serially connected, or such serial connection and parallel connection may be combined.

### (Fourth Embodiment)

In a fourth embodiment, the bipolar battery 10 of the above-described second embodiment or the assembled battery 40 of the above-described third embodiment is mounted as a motor-driving power supply, whereby a vehicle is composed. As the vehicle using the bipolar battery 10 or the assembled battery 40 as the motor-driving power supply, for example, there is mentioned a vehicle in which wheels are driven by a motor, such as a pure electric vehicle that does not use gasoline, a hybrid vehicle such as a series hybrid vehicle and a parallel hybrid vehicle, and a fuel cell electric vehicle.

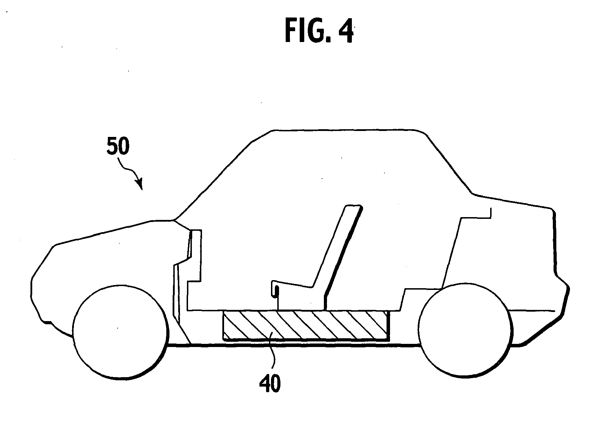

Just for reference, a schematic view of an automobile 50 that mounts the assembled battery 40 thereon is shown in FIG. 4. The assembled battery 40 mounted on the automobile 50 has such characteristics as describe above. Accordingly, the automobile 50 that mounts the assembled battery 40 thereon is excellent in capacity characteristics and output characteristics, and is capable of providing a sufficient output even under high output conditions.

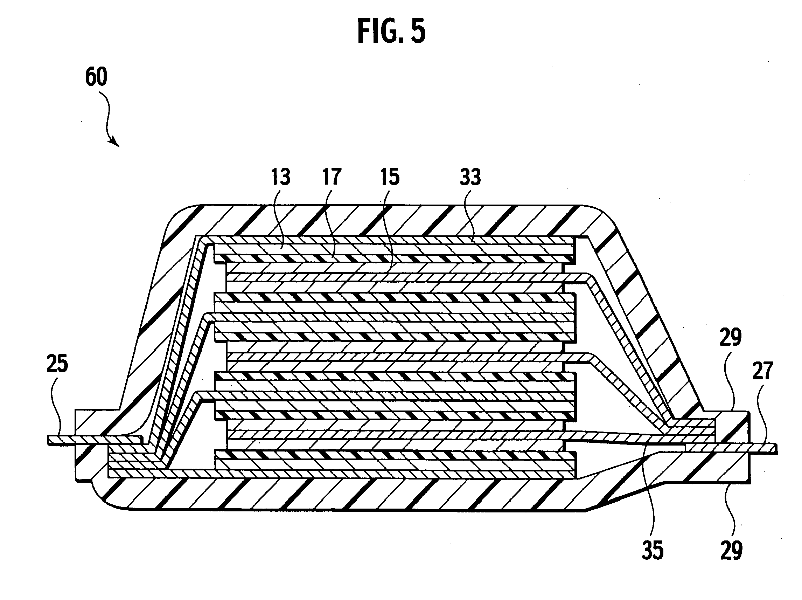

As above, some preferred embodiments of the present invention have been shown; however, the present invention is not limited to the above embodiments, and various modifications, omissions and additions are possible by those skilled in the art. For example, the above-described second embodiment has been described by taking as an example the case of the bipolar battery; however, the technical scope of the battery of the present invention is not limited only to that of the bipolar battery, and for example, the battery of the present invention may be a lithium-ion secondary battery that is not bipolar. Just for reference, a cross-sectional view showing an outline of a lithium-ion secondary battery 60 that is not bipolar is shown in FIG. 5.

A description will be made of the effects of the present invention by using Examples and Comparative examples, which are to be described below. However, the technical scope of the present invention is not limited only to such following examples.

Note that, in Examples 1 to 5 and Comparative examples 1 and 2, "LiNi_{0.8}Co_{0.15}Al_{0.05}O₂" was used as the Ni composite oxide. Moreover, in Examples 6 to 9, "LiNi_{1/3}Co_{1/3}Mn_{1/3}O₂" was used as the Ni composite oxide.

### <Example 1>

### [Manufacturing method of active material layer]

Spinel lithium manganate (LiMn₂O₄) with an average particle diameter D50 of 1 µm and a Ni composite oxide (LiNi_{0.8}Co_{0.15}Al_{0.05}O2) with an average particle diameter D50 of 10 µm were used as the positive electrode active materials. In the positive electrode active materials, a mass ratio of the spinel lithium manganate and the Ni composite oxide was set at 7: 3.

Carbon black was used as the conductive material, PVDF was used as the binder, and NMP was used as the solvent. With regard to a composition of the positive electrode, a mass ratio of the positive electrode active materials, the binder and the conductive material was set at 75: 15: 10.

First, anhydrous NMP with a high purity was poured into a dispersing mixer, and next, PVDF was poured thereinto. Then, PVDF was sufficiently dissolved into the NMP solvent. Thereafter, the active material and the conductive material were poured little by little into the dispersing mixer, and were made affinitive for such a solution in which PVDF was dissolved. The solvent was added to a resultant mixture at a stage where the positive electrode active materials and the conductive material were entirely poured into the dispersing mixer, whereby viscosity of the mixture was adjusted. Slurry thus obtained was coated on Al foil as the current collector, and a thickness of the positive electrode active material layer was adjusted by using a doctor blade with a fixed thickness. Then, the positive electrode active material layer was dried on a hot stirrer, and a density thereof was adjusted by a roll press machine. In such a way, the positive electrode was obtained. A thickness of the obtained positive electrode active material layer was 30 µm.

The obtained positive electrode was cut with a punching jig of which a diameter is 15 mm. Then, a coin cell was fabricated by using this positive electrode, a separator (Celegard 2300 PP/PE/PP; a thickness of 25 µm) with a diameter of 18 mm, and metal Li as the negative electrode, which has a thickness of 1.5 mm and a diameter of 16 mm, while adding thereto an electrolysis solution of 1M LiPF₆ PC/EC=1/1). Next, this coin cell was evaluated. A constant current charge/discharge test was conducted to measure a discharge capacity of the coin cell under evaluation conditions where an evaluation temperature was 20°C, a voltage range was 3 to 4.3V, and a current value was 1 C (=500 µA). Moreover, characteristics of the coin cell when a large current of 50 C was discharged were also confirmed.

### [Measurement method of average particle diameter (D50)]

As sample treatment, cross-section processing by a focused ion beam (FIB) was performed for the electrode, and in order to clarify a distinction between the constituent active materials, an elemental analysis for the cross-section was performed by using the Auger electron spectroscopy (AES). Measurement conditions are as follows.

Device: field-emission Auger electron spectroscope (Model-680 made by ULVAC-PHI, INCORPORATED)

Electron beam acceleration voltage: 10kV

Electron beam diameter: up to ø35 nm

Measurement region: 8 µm×10 µm (10000 powers at full range)

Number of data points: 256 points×256 points

Ion gun acceleration voltage: 3kV

Sputtering rate: 13 nm/min (reduced value to SiO₂)

Subsequently, image processing was performed by using results of the AES measurement, and particle diameters of the materials derived from the respective elements were measured. Measurement conditions are as follows.

Device name: high-speed image processing device, Carl Zeiss KS400

Measurement item: particle diameter (equivalent round diameter) on Mn image of Auger distribution

Measurement conditions: the Mn image of the Auger distribution was captured as a digital image into the image processing device, and the particle diameter thereof was measured.

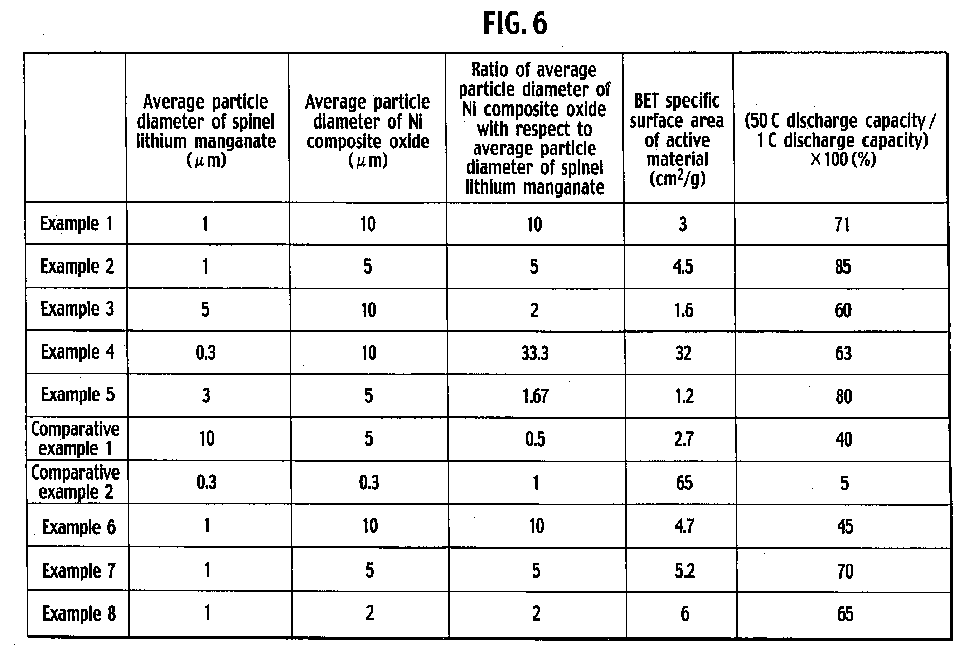

The particle diameters at three spots in the same electrode, which were measured by the above-described method, were averaged, and a value obtained by the averaging was defined as the "average particle diameter (D50)". Results obtained in this procedure are shown in FIG. 6.

### <Example 2>

A positive electrode for a non-aqueous electrolyte secondary battery was fabricated by a similar method to that of Example 1 except that spinel lithium manganate with an average particle diameter D50 of 1 µm and a Ni composite oxide with an average particle diameter D50 of 5 µm were used as the positive electrode active materials.

### <Example 3>

A positive electrode for a non-aqueous electrolyte secondary battery was fabricated by a similar method to that of Example 1 except that spinel lithium manganate with an average particle diameter D50 of 5 µm and a Ni composite oxide with an average particle diameter D50 of 10 µm were used as the positive electrode active materials.

### <Example 4>

A positive electrode for a non-aqueous electrolyte secondary battery was fabricated by a similar method to that of Example 1 except that spinel lithium manganate with an average particle diameter D50 of 0.3 µm and a Ni composite oxide with an average particle diameter D50 of 10 µm were used as the positive electrode active materials.

### <Example 5>

A positive electrode for a non-aqueous electrolyte secondary battery was fabricated by a similar method to that of Example 1 except that spinel lithium manganate with an average particle diameter D50 of 3 µm and a Ni composite oxide with an average particle diameter D50 of 5 µm were used as the positive electrode active materials.

### <Comparative example 1>

A positive electrode for a non-aqueous electrolyte secondary battery was fabricated by a similar method to that of Example 1 except that spinel lithium manganate with an average particle diameter D50 of 10 µm and a Ni composite oxide with an average particle diameter D50 of 5 µm were used as the positive electrode active materials.

### <Comparative example 2>

A positive electrode for a non-aqueous electrolyte secondary battery was fabricated by a similar method to that of Example 1 except that spinel lithium manganate with an average particle diameter D50 of 0.3 µm and a Ni composite oxide with an average particle diameter D50 of 0.3 µm were used as the positive electrode active materials.

### <Example 6>

A positive electrode for a non-aqueous electrolyte secondary battery was fabricated by a similar method to that of Example 1 except that spinel lithium manganate (LiMn₂O₄) with an average particle diameter D50 of 1 µm and a Ni composite oxide (LiNi_{1/3}CO_{1/3}Mn_{1/3}O₂) with an average particle diameter D50 of 10 µm were used as the positive electrode active materials.

### <Example 7>

A positive electrode for a non-aqueous electrolyte secondary battery was fabricated by a similar method to that of Example 1 except that spinel lithium manganate (LiMn₂O₄) with an average particle diameter D50 of 1 µm and a Ni composite oxide (LiNi_{1/3}Co_{1/3}Mn_{1/3}O₂) with an average particle diameter D50 of 5 µm were used as the positive electrode active materials.

### <Example 8>

A positive electrode for a non-aqueous electrolyte secondary battery was fabricated by a similar method to that of Example 1 except that spinel lithium manganate (LiMn₂O₄) with an average particle diameter D50 of 1 µm and a Ni composite oxide (LiNi_{1/3}Co_{1/3}Mn_{1/3}O₂) with an average particle diameter D50 of 2 µm were used as the positive electrode active materials.

As shown in FIG. 6 described above, in all Examples, the output characteristics and the capacity characteristics exhibited high values, and in particular, the output characteristics and the capacity characteristics were increased in Example 2. The reason why results of Example 2 were superior even to results of Example 1 is considered to be as follows. Specifically, it is considered that, in Example 2, the output characteristics and the capacity characteristics were improved by an increase of the specific surface area of the Ni composite oxide, which followed the reduction of the particle diameter thereof. This is because the average particle diameter of the Ni composite oxide in Example 2 is as small as 5 µm though the average particle diameter of the spinel lithium manganate is 1 µm in both of Example 1 and Example 2. Moreover, the reason why the results of Example 2 were superior even to results of Example 3 is considered to be as follows. Specifically, it is considered that, in Example 3, the output characteristics and the capacity characteristics were decreased since the specific surface area of the entirety containing the spinel lithium manganate and the Ni composite oxide was reduced following a comparative increase of the average particle diameter thereof in comparison with that in Example 2.

Meanwhile, in Comparative examples 1 and 2 out of the scope of the present invention, the capacity characteristics and the output characteristics were decreased in comparison with Examples. Particularly, in Comparative example 2, the value of (50 C discharge capacity / 1 C discharge capacity) × 100(%) resulted to be as extremely small as no more than 1/8 of that even in Comparative example 1. It is considered that a deterioration of these characteristics in Comparative example 2 was caused by the increase of the specific surface area of the thermally unstable Ni positive electrode active material, which occurred when the particle diameter of the Ni positive electrode active material was reduced, since the Ni positive electrode active material is inferior in thermal stability. Moreover, it is considered that, since the particle diameter of the entire positive electrode active materials is extremely small, the ratio of the other solid contents, such as the binder, necessary to form the electrode was increased, and the mass of the active material per unit weight was reduced.

However, the consideration of the above-described mechanism results from the surmise of the inventors, which is based on the experimental results concerned, and this mechanism should not be interpreted as the one able to limit the technical scope of the present invention.

The entire contents of Japanese Patent Applications No. P2006-249611 with a filing date of September 14, 2006 and No. P2007-119993 with a filing date of April 27, 2007 are herein incorporated by reference.

Although the invention has been described above by reference to certain embodiments of the invention, the invention is not limited to the embodiments described above and modifications may become apparent to these skilled in the art, in light of the teachings herein. The scope of the invention is defined with reference to the following claims.

## Claims

1. A positive electrode for a non-aqueous electrolyte secondary battery, comprising:
a current collector (11); and
a positive electrode active material layer (13) formed on the current collector (11),
wherein the positive electrode active material layer (13) comprises, as positive electrode active materials, spinel lithium manganate, and a composite oxide represented by the following formula (1):
LiCoᵥNiₓMn_{y}M_{z}O₂ (1)
where v+x+y+z=1, M is any one selected from the group consisting of aluminum, gallium and indium, 0≤v≤0.5, 0.3≤x<1, 0≤y≤0.5 and 0≤z≤0.1, and
an average particle diameter of the composite oxide is larger than an average particle diameter of the spinel lithium manganate.

2. A positive electrode for the non-aqueous electrolyte secondary battery according to claim 1,
wherein a ratio of the average particle diameter of the composite oxide with respect to the average particle diameter of the spinel lithium manganate is within a range from more than 1 to 100 or less.

3. A positive electrode for the non-aqueous electrolyte secondary battery according to claim 2,
wherein the ratio of the average particle diameter of the composite oxide with respect to the average particle diameter of the spinel lithium manganate is within a range from more than 1 to 10 or less.

4. A positive electrode for the non-aqueous electrolyte secondary battery according to any one of claims 1 to 3,
wherein a mass ratio of the composite oxide with respect to the spinel lithium manganate in the positive electrode active material layer (13) is within a range from 5 to 50%.

5. A positive electrode for the non-aqueous electrolyte secondary battery according to any one of claims 1 to 4,
wherein a BET specific surface area of the positive electrode active material is within a range from 1 to 60 cm²/g.

6. A positive electrode for the non-aqueous electrolyte secondary battery according to any one of claims 1 to 5,
wherein the positive electrode active material layer (13) further comprises a binder, and the binder contains at least one selected from the group consisting of polyvinylidene fluoride and styrene-butadiene rubber.

7. A non-aqueous electrolyte secondary battery (10, 60), comprising:
at least one single cell layer formed by stacking a positive electrode (13) according to any one of claims 1 to 6, an electrolyte layer (17), and a negative electrode (15) in this order.

8. An assembled battery (40), comprising:
a non-aqueous electrolyte secondary battery (10, 60) according to claim

9. A vehicle (50), comprising:
a non-aqueous electrolyte secondary battery (10, 60) according to claim 7, the non-aqueous electrolyte secondary battery (10, 60) serving as a motor-driving power supply.
